# EUROPÄISCHE PATENTSCHRIFT

(11) **EP 1 852 587 B1**
(45) Veröffentlichungstag und Bekanntmachung des Hinweises auf die Patenterteilung: **29.06.2011**
(21) Anmeldenummer: 07006518.0
(22) Anmeldetag: 29.03.2007
(51) Int. Cl.: F02B 37/12

(54) **Ladedruckregler für Abgas- Turbolader von Brennkraftmotoren für Automobile**
Load pressure regulator for exhaust gas turbocharger of combustion engines for automobiles
Régulateur de pression de suralimentation pour turbocompresseur de moteurs à combustion interne pour automobile

(30) Priorität: 04.05.2006 DE 102006021127
(43) Veröffentlichungstag der Anmeldung: 07.11.2007
(73) Patentinhaber: smk systeme metall kunststoff gmbh & co. kg., 70794 Filderstadt-Plattenhardt (DE)
(72) Erfinder: Wortmann, Frank, 73765 Neuhausen (DE); Bahm, Klaus, 76703 Kraichtal/Menzingen (DE)
(74) Vertreter: Twelmeier, Ulrich

(56) Entgegenhaltungen:
- EP-A- 1 445 494
- WO-A-01/14750
- DE-A1- 10 027 668
- DE-A1- 19 636 418
- DE-C1- 3 623 677
- DE-U- 7 424 147
- DE-U1-202004 009 313
- DE-U1-202005 017 296
- FR-A- 2 192 261

## Beschreibung

Die Erfindung geht von einem Ladedruckregler mit den im Oberbegriff des Anspruchs 1 angegebenen Merkmalen aus. Ein solcher Ladedruckregler ist aus dem DE 20 2005 017 296 U bekannt. Ein Ladedruckregler ist ein pneumatischer Aktuator, der mit Unterdruck oder Überdruck beaufschlagt wird. Durch die Druckbeaufschlagung bewegt sich eine Stange, die als Regelstange bezeichnet wird, und betätigt z. B. ein Ventil, wozu relativ große Kräfte bis zu 350 N übertragen werden.

Bei Ladedruckreglern für Abgas-Turbolader besteht die Forderung, die Stellung der Steuerstange zu überwachen. Zu diesem Zweck ist es bekannt, in einen aus Kunststoff bestehenden Deckel des Ladedruckreglers einen Wegsensor zu integrieren, welcher auf der Grundlage von PLCD-Technologie (Permanent-Magnetic Linear Contactless Displacement) arbeitet. Ein solcher Sensor (siehe WO 01/14750 A2) ist in der Lage, eine Verlagerung der Steuerstange berührungslos zu messen. Nachteilig dabei ist, dass solche PLCD-Senoren verhältnismäßig teuer sind, dass man für unterschiedliche Ladedruckregler unterschiedliche Deckel mit und ohne integriertem PLCD-Sensor benötigt.

Es sind auch Ladedruckregler bekannt, bei welchen die Position der Steuerstange mittels eines Hall-Sensors überwacht wird. Wird ein Hall-Sensor in einem Magnetfeld angeordnet und von einem Strom durchflossen, so liefert er eine Ausgangsspannung, die proportional zur magnetischen Feldstärke und zum Strom ist. Koppelt man die Regelstange mit einem Dauermagneten, dann ist dessen Feldstärke am Ort des Hall-Sensors von der Lage der Steuerstange abhängig. Ladedruckregler, welche mit einem Hall-Sensor die Stellung der Regelstange überwachen, haben jedoch den Nachteil, dass die Regelstange sich nicht nur in Richtung ihrer Längsachse bewegt, sondern infolge eines unvermeidlichen Spiels auch radiale Bewegungen und Taumelbewegungen ausführen kann, welche zu einem Fehler in der Lagebestimmung führen, wenn nicht durch besondere konstruktive Maßnahmen der Bewegungsspielraum der Regelstange eingeschränkt wird. Es ist bekannt, den Bewegungsspielraum durch federbelastete Gleitführungen einzuschränken. Diese Führungen sind jedoch schwingungsfähig und werden deshalb im Fahrzeug stets zu Schwingungen angeregt, die im Resonanzfall zu ernsthaften Schäden führen können. Ein weiterer Nachteil der bekannten Ladedruckregler liegt darin, dass der Weg, über welchen der Hallsensor ein linear vom Weg abhängendes Signal liefern kann, kürzer ist als der Weg, über welchen sich die Regelstange verschiebt.

Der vorliegenden Erfindung liegt die Aufgabe zugrunde, einen Weg aufzuzeigen, wie man eine preiswerte und genauere Lagebestimmung der Regelstange in einem Ladedruckregler erreichen kann.

Diese Aufgabe wird gelöst durch einen Ladedruckregler mit den im Anspruch 1 angegebenen Merkmalen. Vorteilhafte Weiterbildungen der Erfindung sind Gegenstand der Unteransprüche.

Der erfindungsgemäße Ladedruckregler hat
eine Dose, welche von einem Deckel abgedeckt ist
eine flexible Membrane, welche mit ihrem äußeren Rand zwischen dem äußeren Rand der Dose und dem Deckel eingespannt ist,
eine Regelstange, welche abgedichtet aus der Dose herausgeführt ist, so dass ihr eines Ende in der Dose und ihr anderes Ende außerhalb der Dose liegt,
ein Stützteil für die Membran, welches insbesondere als Membranteller ausgebildet ist, fest mit der Regelstange verbunden ist und der Membran anliegt,
eine Feder, welche das Stützteil beaufschlagt,
einen Anschluss für eine Überdruckquelle auf der der Feder abgewandten Seite der Membran und/oder einen Anschluss für eine Unterdruckquelle auf der der Feder zugewandten Seite der Membran und
eine Messeinrichtung, welche mit wenigstens zwei Hall-Sensoren auf die Stellung der Regelstange anspricht.

Das hat Vorteile:
- Die Hall-Sensoren können berührungslos auf die Stellung der Regelstange ansprechen.
- Hall-Sensoren sind als Messfühler hinreichen klein, hinreichend empfindlich und hinreichend beständig gegenüber den am Abgasstrang eines Fahrzeuges auftretenden Bedingungen (hohe Temperatur und Vibrationen) erhältlich.
- Wenn man zwei oder mehr als zwei Hall-Sensoren vorsieht, können diese auf zwei unterschiedliche Weisen eingesetzt werden, die beide vorteilhaft und in ihrer Kombination besonders vorteilhaft sind.
- Bewegt man einen Magneten über einen Hall-Sensor hinweg, erhält man ein sinusförmiges oder sinusähnliches Ausgangssignal, welches über einen Teilbereich des Sinus linear von dem Weg abhängt, den der Magnet zurücklegt, oder linearisierbar ist. Der Bereich, in welchem ein linear vom Weg des Magneten abhängendes Signal vorliegt, kann dadurch verlängert werden, dass man zwei oder mehr als zwei Hall-Sensoren, vorzugsweise gleiche Hall-Sensoren, in der Flucht der Regelstange so anordnet, dass sich die linearen Abschnitte ihrer Ausgangssignale überlappen. Dann befindet sich der Magnet, der die Stellung der Regelstange angibt, stets im linearen Messbereich eines der Hall-Sensoren.
- Ein weiterer Vorteil wird erreicht, wenn zwei gleiche Hall-Sensoren auf gegenüberliegenden Seiten der Längsachsen der Regelstange spiegelbildlich zueinander angeordnet und so geschaltet sind, dass sich ihre Ausgangssignale addieren. Lageänderungen des Magneten, welche durch radiales Spiel der Regelstange verursacht werden, führen in diesem Fall nicht zu Fehlmessungen, denn wenn sich der Magnet, welcher die Anordnung der Hall-Sensoren umgibt, radial aus seiner Solllage herausbewegt, dann führt das in einem der Hallsensoren zu einem größeren Signal und gleichzeitig in dem anderen Hallsensor zu einem kleineren Signal, aber die Summe der beiden Signale bleibt im wesentlichen gleich und ist - wie gewünscht - ein Maß führ die axiale Stellung des Magneten und damit für die axiale Stellung der Regelstange.

Um die Lage der Regelstange berührungslos erfassen zu können, ist die Regelstange zweckmäßigerweise mit einem Dauermagneten gekoppelt, welcher gemeinsam mit der Regelstange verschiebbar ist. Der Magnet kann unmittelbar am Ende der Regelstange angebracht sein. Vorzugsweise ist er an einem gesonderten Träger angebracht, welcher seinerseits an der Regelstange angebracht ist und sich von der Regelstange in Richtung gegen den Deckel erstreckt. Auf diese Weise kann der Magnet in eine möglichst große Nähe zu der Messeinrichtung gebracht werden, welche sich in dem in den Deckel eingefügten Einsatz befindet.

Der Magnet könnte aber auch ortsfest im Ladedruckregler angebracht sein und auf Flussleitstück einwirken, welches zusammen mit der Regelstange bewegt wird. In diesem Fall kann die Messeinrichtung mit der Hallsensoren auf das Flussleitstück ansprechen, welches sich unter dem Einfluss des Magneten selbst wie ein Magnet verhält. Wenn hier von einem mit der Regelstange mitbewegten Magneten die Rede ist soll das die Möglichkeit einschließen, einen fest angeordneten Magneten und ein mit der Regelstange bewegtes Flussleitstück vorzusehen.

Besonders vorteilhaft ist es, den Magneten so anzuordnen, dass er am Deckel anliegt oder unmittelbar vor dem Deckel liegt, wenn sich die Regelstange in ihrer eingefahrenen Endstellung befindet. In diesem Fall hat man die Möglichkeit, am Ort des Messfühlers der Messeinrichtung eine hohe magnetische Feldstärke und einen hohen Gradienten des magnetischen Feldes infolge der Bewegung der Regelstange zu erzeugen. Das begünstigt die Bildung eines deutlichen Messsignals.

Vorzugsweise ist der Magnet ringförmig ausgebildet, koaxial zur Regelstange angeordnet und in Richtung der Längsachse der Regelstange magnetisiert. Ein solcher rotationssymmetrischer Aufbau passt besonders gut zu einem rotationssymmetrischen Aufbau des Ladedruckreglers, erleichtert den Zusammenbau des Ladedruckreglers und erleichtert das Vermeiden und das Ausgleichen von Lagefehlern und begünstigt die Bildung eines linear vom Verschiebeweg der Regelstange abhängendes Positionssignals.

Um einen solchen günstigen Aufbau zu erreichen, ist der Träger des Magneten zweckmäßigerweise ein längliches, hohles Gebilde, welches eine mit der Längsachse der Regelstange zusammenfallende Längsachse hat. Es könnte sich um ein korbartiges Gebilde handeln, in welchem der Magnet durch einen Kranz von Fingern gehalten ist. Leichter herzustellen, stabiler und einfacher in der Handhabung ist jedoch ein Träger in Gestalt einer Hülse, in welche der ringförmige Magnet eingesetzt ist, vorzugsweise an jenem Ende der Hülse, welches dem Deckel des Ladedruckreglers zugewandt ist.

Der Deckel des Ladedruckreglers hat vorzugsweise eine Öffnung, welche durch einen Einsatz verschließbar ist, in welchem die Messeinrichtung angeordnet ist. Das hat wesentliche Vorteile:
- Der Einsatz mit der Messeineinrichtung kann für unterschiedliche Ladedruckregler gleich sein.
- Die dadurch mögliche Standardisierung führt zu geringeren Herstellkosten und zu verringertem Aufwand bei der Lagerhaltung.
- Die Öffnung im Deckel kann durch einen Blindstopfen geschlossen werden, wenn für einen Ladedruckregler eine Messeinrichtung, welche auf die Stellung der Regelstange anspricht, nicht gefordert ist.
- Der Blindstopfen kann ebenso standardisiert sein wie der Einsatz mit der Messeinrichtung.
- Die Standardisierung, für welche die Erfindung eine Voraussetzung schafft, schafft einen kostenmäßigen Spielraum für eine komfortablere Messeinrichtung.
- Die Verwendung eines Einsatzes, in welchem die Messeinrichtung angeordnet ist, macht es möglich, bei einem Versagen der Messeinrichtung lediglich den Einsatz mit der Messeinrichtung anstatt einen kompletten Ladedruckregler auszutauschen.

Vorzugsweise ist der Einsatz koaxial zur Regelstange angeordnet. Das hat den weiteren Vorteil, dass ein in der Messeinrichtung vorgesehener Messfühler, welcher auf die Lage der Regelstange anspricht, in der Flucht der Regelstange angeordnet sein kann und dass im Einsatz eine bezüglich der Längsachse der Regelstange symmetrische Sensoranordnung verwirklicht werden kann. Ein Anschluss für eine Überdruckquelle oder für eine Unterdruckquelle, welcher im Stand der Technik im allgemeinen in der Flucht der Regelstange am Deckel vorgesehen ist, kann ohne Nachteil für den Ladedruckregler auch seitlich neben dem Einsatz angeordnet sein.

Besonders bevorzugt ist eine Weiterbildung der Erfindung, bei welcher der Einsatz, welcher die Messeinrichtung enthält, einen Fortsatz hat, welcher sich in der Flucht der Regelstange über die Innenseite des Deckels hinaus in das Innere des Ladedruckreglers erstreckt. In diesem Fortsatz sind vorzugsweise ein oder mehrere Messfühler der Messeinrichtung angeordnet. Der Außendurchmesser des Fortsatzes und der Innendurchmesser des ringförmigen Magneten lassen sich mit Vorteil so aufeinander abstimmen, dass der ringförmige Magnet über den Fortsatz hinweg bewegt werden kann. Ein in dem Fortsatz angeordneter Messfühler hat auf diese Weise einen besonders intensiven Feldkontakt mit dem ringförmigen Magnet. Zugleich kann der Fortsatz verwendet werden, um den ringförmigen Magneten und damit die Regelstange axial zu führen bzw. das radiale Spiel der Regelstange in der Dose des Ladedruckreglers zu begrenzen. Ein weiterer Vorteil dieser Anordnung liegt darin, dass trotz des in den Innenraum des Ladedruckreglers ragenden Fortsatzes die Innenraummaße nicht vergrößert werden müssen und keine Stellkraft verloren geht.

Herkömmliche Ladedruckregler, die mit Überdruck betätigt werden, sind so aufgebaut, dass sie, wenn sie mit Überdruck beaufschlagt werden, die Regelstange ausfahren. Herkömmliche Ladedruckregler, welche durch Unterdruck betätigt werden, ziehen die Regelstange, wenn sie mit Unterdruck betätigt werden, üblicherweise ein. In einer bevorzugten Weiterbildung der Erfindung ist die Anordnung der flexiblen Membrane, des sie stützenden Stützteils und des Anschlusses für eine Überdruckquelle bzw. für eine Unterdruckquelle so getroffen, dass in beiden Fällen die Regelstange aus dem Ladedruckregler ausfährt, also sowohl beim Anschließen an eine Überdruckquelle als auch beim Anschließen an eine Unterdruckquelle. Das hat den weiteren Vorteil, dass der Einsatz mit der Messeinrichtung unverändert sowohl für einen Ladedruckregler, der an eine Unterdruckquelle angeschlossen wird, als auch für einen Ladedruckregler verwendet werden kann, der an eine Überdruckquelle angeschlossen wird.

Um bei einem Ladedruckregler, welcher an eine Unterdruckquelle angeschlossen wird, zu erreichen, dass seine Regelstange bei auftretendem Unterdruck ausfährt, ist auf der der Regelstange zugewandten Seite der Membrane, welche gegen die Kraft einer Feder verlagert werden kann, in einem Abstand von dieser Membrane vorzugsweise eine weitere Membrane vorgesehen, welche mit ihrem äußeren Rand an der Dose festgelegt ist und mit ihrem inneren Rand an der Regelstange oder an einem Fortsatz der Regelstange anliegt. Es ist der Raum zwischen den beiden Membranen, welcher sich verkleinern soll, wenn er mit Unterdruck beaufschlagt wird. Um das zu erreichen, hat die weitere Membrane einen kleineren Querschnitt als die zwischen der Dose und dem Deckel eingespannte Membrane. Die von der weiteren Membran auf die Regelstange übertragene Gegenkraft ist in diesem Fall hinreichend klein, weil der Radius quadratisch in sie eingeht.

Während sich die große, zwischen Dose und Deckel eingespannte Membrane in ihrem Außenbereich abrollt, rollt sich die kleinere, weitere Membran vorzugsweise in ihrem inneren Bereich, in unmittelbarer Nachbarschaft der Regelstange ab, wenn die Regelstange verschoben wird.

Die weitere Membran ist mit ihrem äußeren Rand vorzugsweise am Rand des Loches festgelegt, welches sich im Boden der Dose befindet und durch welches auch die Regelstange nach außen führt. An diesem Rand kann die Membran durch Umbördeln des Randes festgelegt sein. Besonders bevorzugt ist es jedoch, den äußeren Rand der weiteren Membran und den äußeren Rand einer Hülse zum Aufnehmen einer Führungsbuchse für die Regelstange und auch noch den äußeren Rand einer Zentriervorrichtung für die Feder, welche die große Membran beaufschlagt, zusammenzufassen und gemeinsam am Rand des Loches festzulegen, welcher sich im Boden der Dose befindet. Zu diesem Zweck kann man z. B. den äußeren Rand der weiteren Membran und den äußeren Rand der Zentriervorrichtung zusammenlegen und gemeinsam mit dem Rand der Hülse für die Führungsbuchse umbördeln und dadurch die Hülse, die Zentriervorrichtung und die weitere Membran zu einer Baueinheit zusammenfassen. Alternativ ist es möglich, den äußeren Rand der Hülse für die Führungsbuchse und den äußeren Rand der weiteren Membran zusammenzulegen und durch Umbördeln des äußeren Randes der Zentriervorrichtung mit dieser zu einer Baueinheit zusammenzufassen. In beiden Fällen kann man den Bördelflansch, der die drei Teile zusammenhält, durch Verschweißen oder Verlöten mit dem Boden der Dose am Rand des Loches festlegen, welches sich im Boden der Dose befindet.

Als Zentriervorrichtung eignet sich besonders ein konischer Ring, auf den die als Wendelfeder ausgebildete Feder aufgesteckt werden kann. An der Innenseite des konischen Rings kann sich die kleinere Membran abstützen und anschmiegen und erhält dadurch eine gut definierte Lage, die für einen ungestörten Abrollvorgang günstig ist.

Ausführungsbeispiele der Erfindung sind in den Zeichnungen dargestellt. Gleiche oder einander entsprechende Teile sind mit übereinstimmenden Bezugszahlen bezeichnet.
- Figur 1: zeigt einen ersten Ladedruckregler in einem Längsschnitt,
- Figur 2: zeigt die Signale zweier Hallsensoren in Abhängigkeit vom Weg der Regelstange, und
- Figur 3: zeigt ein zweites Beispiel eines Ladedruckreglers im Längsschnitt.

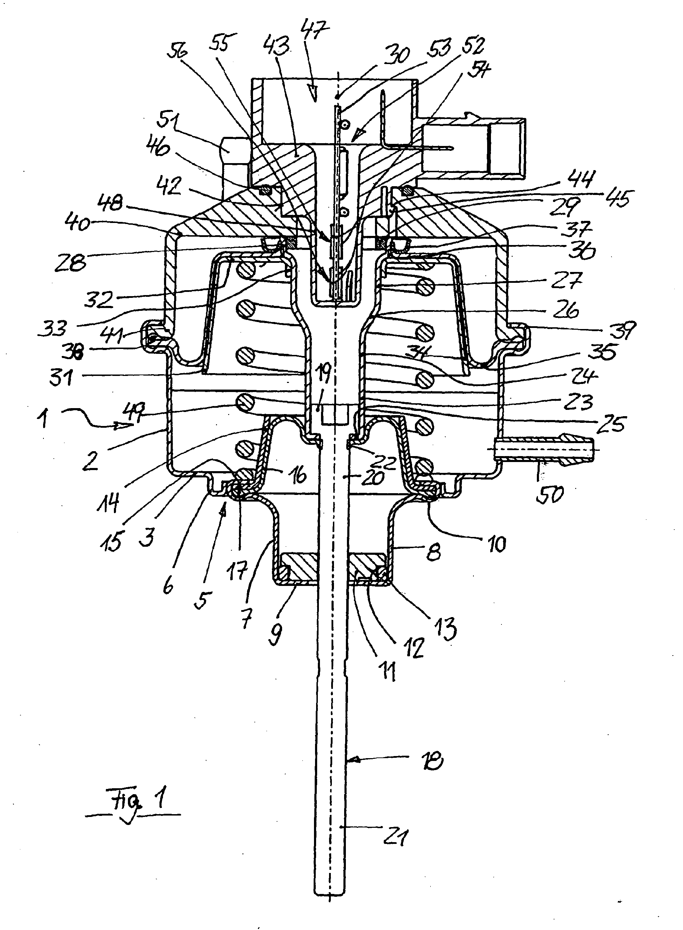

Der in Figur 1 dargestellte Ladedruckregler hat eine Dose 1 mit einer annähernd zylindrischen oder schwach konischen Umfangswand 2 und mit einem Boden 3. Die Dose 1 besteht vorzugsweise aus Metall und kann z. B. durch Tiefziehen aus Blech gebildet sein. In der Mitte des Bodens 3 befindet sich ein kreisrundes Loch 5, welches von einem Hals 6 umgeben ist, welcher im Radialschnitt U-förmig ausgebildet ist, was ihm eine erhöhte Formstabilität verleiht. Der Hals 6 kann durch einen Bördelvorgang gebildet sein.

Eine erste Hülse 7 hat einen zylindrischen Hauptteil 8, welcher einerseits durch einen radial einwärts gerichteten Flansch 9 und andererseits durch einen radial auswärts gerichteten Flansch 10 begrenzt ist. Bei der ersten Hülse 7 handelt es sich vorzugsweise ebenfalls um ein Tiefziehteil aus Blech. In der ersten Hülse 7 ist am radial einwärts gerichteten Flansch 9 eine Führungsbuchse 11 angeordnet, welche vorzugsweise aus einer Scheibe aus einem hochtemperaturbeständigen Kunststoff oder aus einer Keramik besteht. Auf ihrer Außenseite hat die Führungsbuchse 11 eine ringförmige Ausnehmung 12, welche zum Flansch 9 und zur Umfangswand des Hauptteils 8 offen ist und einen O-Ring 13 aufnimmt, welcher den Spalt zwischen der Hülse 7 und der Umfangswand des Hauptteils 8 überbrückt und die Führungsbuchse 11 begrenzt nachgebend und schwingungsdämpfend in der ersten Hülse 7 fixiert. Die Lage der Führungsbuchse 11 kann durch Eindrücken der sie aufnehmenden Hülse 7 gesichert sein.

Ein konischer Zentrierring 14 hat einen radial nach außen gerichteten Flansch 15, welcher am radial nach außen gerichteten Flansch 10 der ersten Hülse 7 festgelegt ist, indem er umgebördelt ist und den Flansch 15 des Zentrierrings 14 umschließt. Eine Rollmembrane 16, welche bevorzugt aus einem elastomeren Kunststoff geformt ist, hat einen radial nach außen gerichteten Rand 17, welcher zwischen dem Flansch 15 des Zentrierrings 14 und dem radial nach außen gerichteten Flansch 10 der ersten Hülse 7 eingespannt und durch das Bördeln des nach außen gerichteten Flansches 10 festgeklemmt ist. Um ein Herausziehen des äußeren Randes 17 der Rollmembrane 16 aus dem Bördelflansch 10 zu erschweren, ist der äußere Rand 17 verdickt ausgebildet. Auf diese Weise wird beim Herstellen des Bördelflansches 10 eine Taille gebildet, welche die Lage des äußeren Randes 17 der Rollmembrane 16 sichert.

Die Rollmembrane 16 liegt mit ihrem mittleren Abschnitt der konischen Innenseite des Zentrierrings 14 an und erstreckt sich in einem Bogen, dessen konkave Seite der Führungsbuchse 11 zugewandt ist, zum Schaft 20 einer Regelstange 18, welche vorzugsweise als Imbusschraube ausgebildet ist, welche einen Kopf 19, daran anschließend einen zylindrischen Schaft 20 und daran anschließend einen Gewindeabschnitt 21 hat. Die Rollmembran 16 hat ein zentrisches Loch mit einem verdickten inneren Rand 22, welcher in unmittelbarer Nähe des Kopfes 19 der Regelstange 18 dem Schaft 20 mit Vorspannung anliegt.

Die Regelstange 18 ist fest mit einer zweiten Hülse 23 verbunden, welche vorzugsweise aus Blech besteht, einen zylindrischen Abschnitt 24 hat, dessen Innendurchmesser mit dem Außendurchmesser des Kopfes 19 der Regelstange 18 übereinstimmt und einen radial einwärts gerichteten Flansch 25 hat, welcher formschlüssig hinter den Kopf 19 greift und dessen Rückseite anliegt. Dem radial einwärts gerichteten Flansch 25 liegt der an den inneren Rand 22 angrenzende Abschnitt der Rollmembran 16 an.

Der zylindrische Abschnitt 24 der zweiten Hülse 23 setzt sich über einen konischen Übergangsabschnitt 26 in einen zylindrischen Abschnitt 27 mit größerem Durchmesser fort, an welchen ein Hals 28 anschließt, dessen Durchmesser gegenüber dem zylindrischen Abschnitt 27 nochmals vergrößert ist. Der Hals 28 umschließt fest einen ringförmigen Magnet 29, welcher eine axiale Magnetisierungsrichtung aufweist, d. h., eine Magnetisierungsrichtung in Richtung der Längsachse 30 der Regelstange 18.

Ein Membranteller 31 hat einen ebenen Boden 32, welcher sich rechtwinklig zur Achse 30 der Regelstange 18 erstreckt und ein zentrales Loch hat, welches durch einen Hals 33 begrenzt ist, welcher dem Abschnitt 27 der zweiten Hülse 23 anliegt, und zwar in unmittelbarer Nachbarschaft des Halses 28. Die Lage des Membrantellers 31 ist auf der zweiten Hülse 23 durch eine Wendelfeder 49 festgelegt. Sie kann auch z. B. durch Verlöten, Verschweißen, Verkleben oder durch Aufpressen des Halses 33 auf die zweite Hülse 23 gesichert sein.

An den ebenen Abschnitt 32 des Membrantellers 31 schließt ein sich konisch erweiternder Abschnitt 34 an, welcher gegen den Boden 3 gerichtet und diesem gegenüber abstandsveränderlich ist. Der Außenseite des Membrantellers 31 liegt eine Membran 35 an, die aus demselben flexiblen Material wie die Rollmembran 16 bestehen kann und ein zentrales Loch hat, welches durch einen verdickten Rand 36 begrenzt ist, welcher der zweiten Hülse 23 anliegt und dort durch ein ringförmiges Sicherungsblech 37 festgelegt ist, welches im Radialschnitt ein C-förmiges Profil hat. Der innere Rand 36 der Membrane 35 ist zwischen dem Membranteller 31 und dem ringförmigen Sicherungsblech 37 eingespannt. Der Hals 28 der zweiten Hülse 23 ist an seinem Rand nach außen gebördelt und hält das ringförmige Sicherungsblech 37 unverlierbar fest.

Der verdickte äußere Rand 38 der Membrane 35 ist zwischen dem äußeren Rand 39 der Dose 1 und dem äußeren Rand 41 eines Deckels 40 eingespannt, welcher die Dose 1 abdeckt. Der Deckel 40 ist im dargestellten Beispiel ein durch Spritzgießen aus Kunststoff hergestelltes Formteil, könnte jedoch auch aus Metall bestehen. Um den verdickten Rand 38 der Membrane 35 unverlierbar festzulegen, ist der Rand 39 der Dose 1 umgebördelt und umschließt auf diese Weise sowohl den äußeren Rand 38 der Membrane 35 als auch den äußeren Rand 41 des Deckels 40.

Der Deckel 40 hat eine zentrische, abgestufte Öffnung 42, in welche ein Formteil 43 aus Kunststoff eingesetzt ist, welches die Öffnung 42 verschließt. Das Formteil 43 ist zu der abgestuften Öffnung 42 passend abgestuft ausgebildet, greift formschlüssig in die Öffnung 42 ein und ist darin durch Verrasten festgelegt. Zu diesem Zweck ist die Öffnung 42 im Deckel 40 mit mehreren Hinterschnitten 44 versehen, von denen nur einer dargestellt ist. Das Formteil 43 ist mit zu den Hinterschnitten 44 passenden Rasthaken 45 versehen, welche hinter die Hinterschnitte 44 schnappen, wenn das Formteil 43 in die Öffnung 42 des Deckels 40 gesteckt wird. Ein O-Ring 46 dichtet den Spalt zwischen dem Formteil 43 und dem Deckel 40 gegen das Eindringen von Feuchtigkeit ab. Das Formteil 43 könnte auch in den Deckel 40 geschraubt anstatt mit ihm verrastet zu sein.

Das Formteil 43 ist Teil eines Gehäuses mit einem Innenraum 47 und hat einen koaxial zur Regelstange 18 verlaufenden Fortsatz 48, welcher in die zweite Hülse 23 ragt.

Die Wendelfeder 49 ist zwischen dem Membranteller 31 und dem umgebördelten Rand der ersten Hülse 7 eingespannt. Ihr eines Ende wird durch den Zentrierring 14 zentriert und drückt den Membranteller 31 in Richtung gegen den Deckel 40. Dabei nimmt der Membranteller 31 die zweite Hülse 23 mit, bis diese mit ihrem vorderen Rand, an welchem der Magnet 29 angeordnet ist, am Deckel 40 anschlägt. Diese Stellung zeigt die Figur 1.

Es ist die Aufgabe des Ladedruckreglers, mittels der Regelstange 18 auf einen Abgas-turbolader eines Fahrzeugs mit Verbrennungsmotor, insbesondere mit Dieselmotor, einzuwirken. Zu diesem Zweck wird die Membrane 35 entweder auf ihrer dem Deckel 40 zugewandten Seite mit einem Überdruck oder auf ihrer der Wendelfeder 49 zugewandten Seite mit einem Unterdruck beaufschlagt. Zu diesem Zweck ist an der Dose 1 ein erster Stutzen 50 zum Anschließen einer Saugleitung vorgesehen, wohingegen am Deckel 40 ein zweiter Stutzen 51 vorgesehen, an welchen eine Überdruckleitung angeschlossen werden kann.

Liegt am Stutzen 50 Unterdruck an, dann drückt die Membrane 35 den Membranteller 31 unter Zusammendrücken der Wendelfeder 49 vom Deckel 40 weg, wobei sich der Raum zwischen der Membrane 35 und der Rollmembrane 26 verkleinert. Diese Verkleinerung wird dadurch erreicht, dass sich die Membrane 35 von der zweiten Hülse 23 bis zum äußeren Rand der Dose 1 erstreckt, wohingegen sich die Rollmembrane 16 lediglich von der Regelstange 18 bis zum Rand des Loches im Boden 3 der Dose 1 erstreckt. Dadurch verdrängt die Rollmembrane 16, wenn sie beim Verschieben der Regelstange 18 am konischen Zentrierring 14 abrollt, ein kleineres Volumen als die Membrane 35. Der erforderliche Druckausgleich in der Kammer zwischen der Rollmembrane 16 und der Führungsbuchse 11 erfolgt durch den Führungsspalt zwischen der Führungsbuchse 11 und der Regelstange 18. Der erforderliche Druckausgleich in der Kammer zwischen dem Deckel 40 und der flexiblen Membrane 35 erfolgt durch den offenen zweiten Stutzen 51. Ist an den zweiten Stutzen 51 eine Überdruckleitung angeschlossen, dann bewirkt der Überdruck eine Verschiebung des Membrantellers 31 und der Regelstange 18 vom Deckel 40 weg. Die Kammer zwischen der flexiblen Membrane 35 und der Rollmembrane 16 wird durch den ersten Stutzen 50 entlüftet. Die Kammer zwischen der Rollmembrane 16 und der Führungsbuchse 11 wird durch den Führungsspalt zwischen der Führungsbuchse 11 und der Regelstange 18 entlüftet.

Der Verschiebeweg des Membrantellers 31 hängt vom Druckunterschied ab, der auf den beiden Seiten der Membrane 35 herrscht und findet spätestens sein Ende, wenn der äußere Rand des Membrantellers 31 am Boden 3 der Dose 1 anschlägt. Der Membranteller 31 nimmt die zweite Hülse 23 und mit ihr die Regelstange 18 mit. Um deren Position überwachen zu können, ist in dem Raum 47 des Formteils 43 eine Messeinrichtung 52 vorgesehen, welche die Position der Regelstange 18 berührungslos bestimmen kann. Zu diesem Zweck sind auf einer Leiterplatte 53 vier Hallsensoren 54 vorgesehen, die zu zwei Paaren 55 und 56 zusammengefasst sind, in denen jeweils zwei Hallsensoren deckungsgleich auf der Vorderseite und auf der Rückseite der Leiterplatte 53 angeordnet sind, wobei die beiden Paare 55 und 56 in Längsrichtung der Achse 30 einen Abstand voneinander haben. Bewegt sich der ringförmige Magnet 29 an den Hallsensoren 54 vorbei, so wird in diesen ein Spannungssignal erzeugt, welches sinusförmig oder sinusähnlich vom Weg des Magneten 29 und damit vom Weg der Regelstange 18 abhängt. Die zwei Hallsensoren 54 eines jeden Paares 55 und 56, sind so zusammengeschaltet, dass sich die in ihnen erzeugten Spannungssignale addieren.

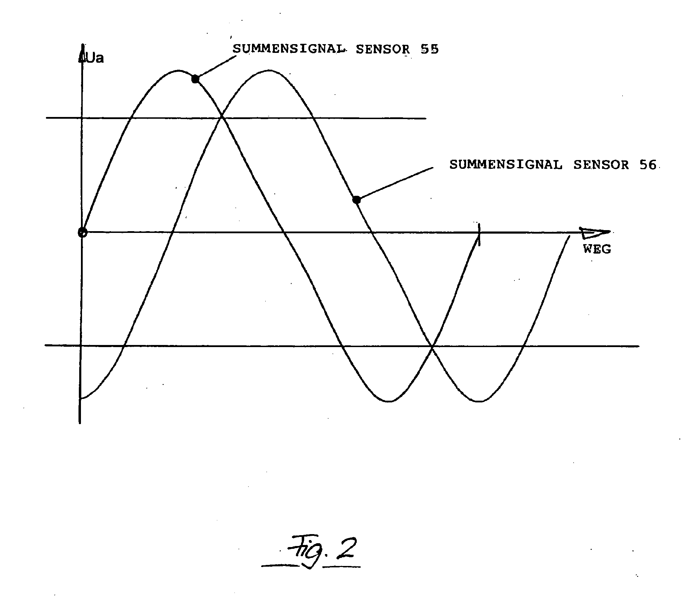

Figur 2 zeigt den Verlauf der Spannungssignale in Abhängigkeit vom Verschiebeweg der Regelstange 18 für die beiden Hallsensor-Paare 55 und 56. Die einigermaßen linearen Bereiche der Sinuskurven der beiden Paare 55 und 56 überlappen sich, so dass immer eines der beiden Paare 55 und 56 benutzt werden kann, um eine lineares Spannung/Weg-Signal zu erhalten. Die erforderliche Signalauswertung erfolgt in einer nicht im Detail dargestellten elektronischen Schaltung, die in dem Raum 47 untergebracht und vorzugsweise mit einem anwendungsspezifischen integrierten Schaltkreis 57 (ASIC) ausgerüstet ist.

Taumelbewegungen der Regelstange 18, die sich in eine Taumelbewegung des ringförmigen Magneten 29 fortsetzen, werden dadurch ausgeglichen, dass die Spannungen der Hallsensoren 54, welche paarweise zusammengefasst sind, addiert werden. Wenn infolge einer Taumelbewegung der radiale Abstand des ringförmigen Magneten 29 von einem Hallsensor eines Paares 55, 56 kleiner wird, wird der radiale Abstand des Magneten vom anderen Hallsensor desselben Paares 55, 56 größer. Folglich wird das Signal des einen Hallsensors höher und dass des anderen Hallsensors kleiner, aber das Summensignal bleibt gleich, so dass der Einfluss eines Radialspiels der Regelstange 18 auf das Messergebnis kompensiert wird. Durch das Anordnen von zwei Paaren 55, 56 von Hallsensoren 54 in einem axialen Abstand hintereinander erreicht man zusätzlich einen hinreichend langen linearen Messbereich für die Positionsbestimmung der Regelstange 18.

Die Anordnung der flexiblen Membran 35 und der Rollmembran 16 ist so getroffen, dass sowohl beim Beaufschlagen des Ladedruckreglers mit Überdruck als auch beim Beaufschlagen des Ladedruckreglers mit Unterdruck die Membran 35 stets auf den sie stützenden Membranteller 31 und die Rollmembran 16 auf den sie stützenden konischen Zentrierring 14 drückt. Keine Membran wird jemals abgehoben. Deshalb treten weder Dichtungsprobleme noch besondere Verschleißprobleme auf.

### Zum Zusammenbauen des Ladedruckreglers kann man wie folgt vorgehen:

In die zweite Hülse 23 wird der ringförmige Magnet 29 eingesetzt und z. B. durch Kleben oder Verpressen fixiert. Der Membranteller 31 und die Wendelfeder 40 werden bis zum Anschlag auf die Hülse 23 und diese bis zum Anschlag auf die Regelstange 18 geschoben. Die Führungsbuchse 11 wird mit dem O-Ring 13 in die erste Hülse 7 eingesetzt und deren äußerer Rand zur Bildung eines Bördelflansches 10 um den äußeren Rand der Rollmembran 16 und des Zentrierringes 14 herum gebördelt. Die Regelstange wird mit ihrem Schaft 20 durch das Loch der Rollmembran 16 und durch die Führungsbuchse 11 geschoben, bis der innere Rand 22 der Rollmembran 16 am radial einwärts gerichteten Flansch 25 der zweiten Hülse 23 liegt. Dabei wird der Zentrierring 23 in die Wendelfeder 40 eingeführt. Der Bördelflansch 10 wird in den Hals 5 eingefügt, welcher das Loch im Boden 3 der Dose 1 begrenzt und mit dem Hals 5 verschweißt. Die Membran 35 wird bis zur Anlage an dem Membranteller 31 auf die zweite Hülse 23 geschoben und durch Aufschieben des Sicherungsblechs 37 gesichert. Der äußere Rand 38 der Membrane 35 wird zwischen den Rand 41 des Deckels 40 und den Rand 39 der Dose 1 eingefügt und durch Bördeln des Randes 39 festgeklemmt, wobei zugleich die Dose 1 und ihr Deckel 40 fest miteinander verbunden werden. Als letztes wird der Einsatz 43 mit der Messeinrichtung in den Deckel 40 gesteckt, bis seine Rasthaken 45 einschnappen. Die meisten Schritte des Zusammenbaus sind Steckvorgänge, was den Zusammenbau vereinfacht und verbilligt.

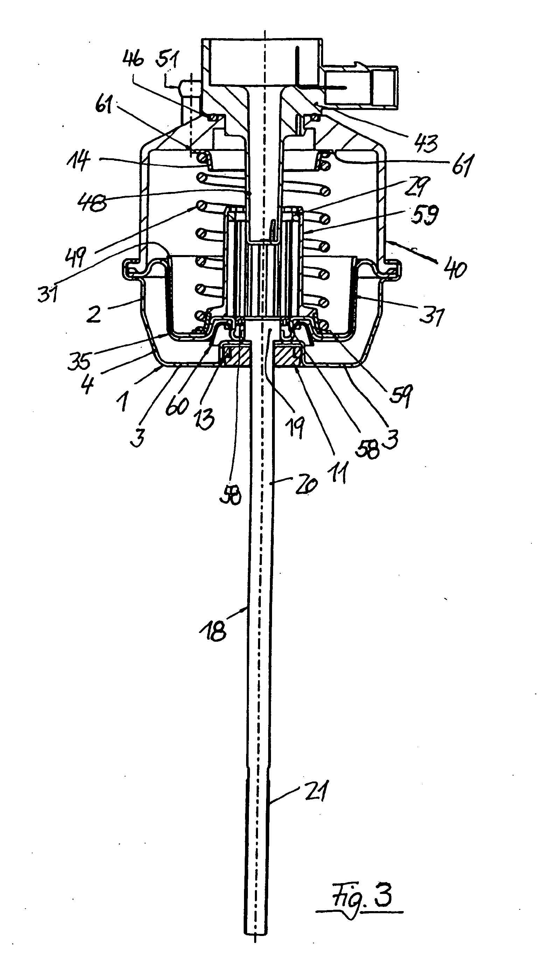

Das in Figur 3 dargestellte Ausführungsbeispiel zeigt einen Ladedruckregler, welcher durch Unterdruck betätigt wird und sich von dem in Figur 1 dargestellten Ladedruckregler dadurch unterscheidet, dass die Regelstange unter der Wirkung eines Unterdrucks nicht ausgefahren, sondern eingezogen wird, wie es bei Ladedruckreglern, welche auf Unterdruck reagieren, üblich ist. Figur 4 zeigt, dass die Erfindung auch bei solchen Ladedruckreglern mit Vorteil anwendbar ist. Der grundsätzliche Aufbau eines solchen Ladedruckreglers ohne eine auf die Stellung der Regelstange ansprechende Meßeinrichtung ist aus dem DE 20 2005 017 296 bekannt. Abweichend von dem in Figur 1 dargestellten Ausführungsbeispiel ist die Rollmembran entfallen. Die Dose 1 hat einen konischen Umfangsabschnitt 4. Die Membran 35 und der Membranteller 31 sind umgekehrt eingebaut. Der Membranteller 31 ist unmittelbar am Kopf 19 der Regelstange angebracht und zusätzlich durch einen Sicherungsring 58 gesichert. Einer profilierten Kontur des Membrantellers 31 liegt formschlüssig eine komplementär profilierte Zentrierhülse 59 für die Wendelfeder 49 an. Die Zentrierhülse 59 ist zugleich Träger eines ringförmigen Magneten 29, welchen sie an ihrem den Deckel 40 zugewandten Ende aufnimmt.

Im dargestellten Beispiel ist die Zentrierhülse ein Formteil aus Kunststoff, in welchen der Magnet 29 eingebettet ist.

Ein ringförmiger Clip 60 sichert die Lage des inneren Randes 36 der Membrane 35 in einer ringförmigen Vertiefung des Membrantellers 31.

An der Innenseite des Deckels 40 ist ein ringförmiger Vorsprung 61 geformt, in welchen lose ein Zentrierring 14 für die Wendelfeder 49 eingelegt ist. Der Zentrierring 14 wird durch die Kraft der Wendelfeder 49 an seinem Platz gehalten.

Eine Führungsbuchse 11 aus einem hochtemperaturbeständigen Kunststoff oder aus einer Keramik ist mit einem O-Ring 13 schwingungsdämpfend in eine Vertiefung des Bodens 3 der Dose 1 eingesetzt.

Der Einsatz 43 mit einer Messeinrichtung - es kann derselbe sein wie im Beispiel der Figur 1 - ist in den Deckel 40 aus Kunststoff eingesetzt und ragt mit seinem Fortsatz 48 bis in die Zentrierhülse 59 hinein, in welcher sich der Magnet 29 befindet. Mit Ausnahme der Befestigung des Membrantellers 31 am Kopf 19 der Regelstange 18 und des Bördeln des äußeren Randes 39 der Dose 1 werden für den Zusammenbau des Ladedruckreglers nur Steckvorgänge benötigt. Statt durch Bördeln kann man die Dose 1 und den Deckel 40 auch durch Rasten, d.h. durch einen einfachen Steckvorgang ersetzen und dadurch den Zusammenbau weiter vereinfachen.

### Bezugszeichenliste:

- 1.: Dose
- 2.: Umfangswand
- 3.: Boden
- 4.: konischer Abschnitt
- 5.: Loch
- 6.: Hals
- 7.: Hülse
- 8.: Hauptteil
- 9.: radial einwärts gerichteter Flansch
- 10.: radial auswärts gerichteter Flansch
- 11.: Führungsbuchse
- 12.: Ausnehmung
- 13.: O-Ring
- 14.: Zentrierring
- 15.: Flansch
- 16.: Rollmembran
- 17.: äußerer Rand der Rollmembran
- 18.: Regelstange
- 19.: Kopf
- 20.: Schaft
- 21.: Gewindeabschnitt
- 22.: innerer Rand der Rollmembran
- 23.: Träger, Hülse
- 24.: zylindrischer Abschnitt
- 25.: radial einwärts gerichteter Flansch
- 26.: konischer Übergangsabschnitt
- 27.: zylindrischer Abschnitt
- 28.: Hals
- 29.: Magnet
- 30.: Längsachse
- 31.: Stützteil, Membranteller
- 32.: Boden
- 33.: Hals
- 34.: Abschnitt
- 35.: Membran
- 36.: verdickter innerer Rand der Membrane 35
- 37.: Sicherungsblech
- 38.: äußerer Rand der Membrane 35
- 39.: äußerer Rand der Dose 1
- 40.: Deckel
- 41.: Rand
- 42.: abgestufte Öffnung
- 43.: Einsatz, Formteil
- 44.: Hinterschnitte
- 45.: Rasthaken
- 46.: O-Ring
- 47.: Innenraum
- 48.: Fortsatz
- 49.: Wendelfeder
- 50.: erster Stutzen
- 51.: zweiter Stutzen
- 52.: Messeinrichtung
- 53.: Leiterplatte
- 54.: Hallsensor
- 55.: 1. Paar Hallsensoren
- 56.: 2. Paar Hallsensoren
- 57.: ASIC
- 58.: Sicherungsring
- 59.: Zentrierhülse
- 60.: Clip
- 61.: ringförmiger Vorsprung

## Patentansprüche

1. Ladedruckregler für Abgas-Turbolader von Brennkraftmotoren für Automobile
- mit einer Dose (1), welche von einem Deckel (40) abgedeckt ist,
- mit einer flexiblen Membrane (35), welche mit ihrem äußeren Rand (38) zwischen dem äußeren Rand (39) der Dose (1) und dem Deckel (40) eingespannt ist,
- mit einer Regelstange (18), welche abgedichtet aus der Dose (1) herausgeführt ist, so dass ihr eines Ende (19) in der Dose (1) und ihr anderes Ende außerhalb der Dose (1) liegt,
- mit einem Stützteil (31) für die Membran (35), welches fest mit der Regelstange (18) verbunden ist und der Membran (35) anliegt,
- mit einer das Stützteil (31) beaufschlagenden Feder (49),
- mit einem Anschluss (51) für eine Überdruckquelle auf der der Feder (49) abgewandten Seite der Membran (35) und/oder mit einem Anschluss (59) für eine Unterdruckquelle auf der der Feder (49) zugewandten Seite der Membran (35),
- und mit einer Messeinrichtung (52), welche mit einem Hall-Sensor (54) auf die Stellung der Regelstange (18) anspricht,
**dadurch gekennzeichnet, dass** die Messeinrichtung noch wenigstens einen weiteren auf die Stellung der Regelstange (18) ansprechenden Hall-Sensor (54) aufweist.

2. Ladedruckregler nach Anspruch 1, **dadurch gekennzeichnet, dass** ein Magnet (29) vorgesehen ist, welcher gemeinsam mit der Regelstange (18) verschiebbar ist, und dass die Messeinrichtung (52) auf die Lage des Magneten (29) anspricht.

3. Ladedruckregler nach Anspruch 2, **dadurch gekennzeichnet, dass** der Magnet an dem in der Dose (1) liegenden Ende (19) der Regelstange (18) angebracht ist.

4. Ladedruckregler nach Anspruch 2, **dadurch gekennzeichnet, dass** der Magnet (29) an einem Träger (23) angebracht ist, welcher an der Regelstange (18) angebracht ist und sich von dieser in Richtung gegen den Deckel (40) erstreckt.

5. Ladedruckregler nach Anspruch 4, **dadurch gekennzeichnet, dass** der Magnet (29) in der einen Endstellung der Regelstange (18), in welcher diese in die Dose (1) eingefahren ist, am Deckel (40) liegt.

6. Ladedruckregler nach einem der Ansprüche 2 bis 5, **dadurch gekennzeichnet, dass** der Magnet (29) ringförmig ausgebildet und koaxial zur Regelstange (18) angeordnet ist.

7. Ladedruckregler nach einem der Ansprüche 2 bis 6, **dadurch gekennzeichnet, dass** der Magnet (29) in Richtung der Längsachse (30) der Regelstange (18) magnetisiert ist.

8. Ladedruckregler nach einem der Ansprüche 4 bis 7, **dadurch gekennzeichnet, dass** der Träger (23) des Magneten (29) ein längliches, hohles Gebilde ist, welches eine mit der Längsachse (30) der Regelstange (18) zusammenfallende Längsachse hat.

9. Ladedruckregler nach Anspruch 8, **dadurch gekennzeichnet, dass** der Träger (23) eine Hülse ist.

10. Ladedruckregler nach einem der vorstehenden Ansprüche, **dadurch gekennzeichnet, dass** zwei gleiche Hallsensoren (54) auf gegenüberliegenden Seiten der Längsachse (30) der Regelstange (18) spiegelbildlich zueinander angeordnet und so geschaltet sind, dass sich ihre Ausgangssignale addieren.

11. Ladedruckregler nach einem der vorstehenden Ansprüche, **dadurch gekennzeichnet, dass** wenigstens zwei Hallsensoren (54) mit einem gegenseitigen Abstand in Richtung der Längsachse (30) der Regelstange (18) angeordnet sind.

12. Ladedruckregler nach einem der vorstehenden Ansprüche, **dadurch gekennzeichnet, dass** wenigstens zwei Paare (55, 56) von Hallsensoren mit einem gegenseitigen Abstand in Richtung der Längsachse (30) der Regelstange (18) angeordnet sind.

13. Ladedruckregler nach einem der vorstehenden Ansprüche, **dadurch gekennzeichnet, dass** der Deckel (40) eine Öffnung (42) hat welche durch einen Einsatz (43) verschließbar ist, in welchem die Messeinrichtung (52) angeordnet ist.

14. Ladedruckregler nach Anspruch 13, **dadurch gekennzeichnet, dass** der Einsatz (43) einen Fortsatz (48) hat, welcher sich über die Innenseite des Deckels (40) hinaus in Richtung zur Regelstange (18) in das Innere des Ladedruckreglers erstreckt.

15. Ladedruckregler nach Anspruch 14, **dadurch gekennzeichnet, dass** die HallSensoren (54) in dem Fortsatz (48) der Messeinrichtung angeordnet ist.

16. Ladedruckregler nach einem der vorstehenden Ansprüche, **dadurch gekennzeichnet, dass** die Anordnung der flexiblen Membrane (35), des sie stützenden Stützteils (31) und des Anschlusses (51) für eine Überdruckquelle so getroffen ist, dass die Regelstange (18) bei Anschließen an einer Überdruckquelle aus dem Ladedruckregler ausfährt.

17. Ladedruckregler nach einem der vorstehenden Ansprüche, **dadurch gekennzeichnet, dass** die Anordnung der flexiblen Membrane (35), des sie stützenden Stützteils (31) und des Anschlusses (59) für eine Unterdruckquelle so getroffen ist, dass die Regelstange (18) bei Anschließen an eine Unterdruckquelle aus dem Ladedruckregler ausfährt.

18. Ladedruckregler nach einem der vorstehenden Ansprüche, **dadurch gekennzeichnet, dass** auf der der Regelstange (18) zugewandten Seite der Membrane (35) in einem Abstand von dieser eine weitere Membrane (16) vorgesehen ist, welche mit ihrem äußeren Rand (17) an der Dose (1) festgelegt ist und mit ihrem inneren Rand (22) an der Regelstange (18) oder an einem Fortsatz (23) der Regelstange (18) anliegt.

19. Ladedruckregler nach Anspruch 18, **dadurch gekennzeichnet, dass** die weitere Membrane (16) einen kleineren Querschnitt als die zwischen der Dose (1) und dem Deckel (40) eingespannte Membrane (35) hat.

20. Ladedruckregler nach Anspruch 18 oder 19, **dadurch gekennzeichnet, dass** die Membran (35) in der Nachbarschaft ihres äußeren Randes (38) abrollt, wohingegen die weitere Membrane, auch als Rollmembran (16) bezeichnet, in dem ihrem inneren Rand (22) benachbarten Bereich abrollt.

21. Ladedruckregler nach Anspruch 18, 19 oder 20, **dadurch gekennzeichnet, dass** der Außendurchmesser der weiteren Membrane (16) kleiner ist als der Außendurchmesser der zwischen der Dose (1) und dem Deckel (40) eingespannten Membrane (35).

22. Ladedruckregler nach einem der Ansprüche 18 bis 21, **dadurch gekennzeichnet, dass** die weitere Membran (16) am Rand eines Loches (5) festgelegt ist, welches sich im Boden (3) der Dose (1) befindet.

23. Ladedruckregler nach Anspruch 22, **dadurch gekennzeichnet, dass** an dem Rand des Loches (5) zusammen mit dem äußeren Rand (17) der weiteren Membrane (16) eine Hülse (7) zum Aufnehmen einer Führungsbuchse (11) für die Regelstange (18) festgelegt ist.

24. Ladedruckregler nach Anspruch 22 oder 23, **dadurch gekennzeichnet, dass** an dem Rand des Loches (5) im Boden (3) der Dose (1) zusätzlich eine sich von dem Loch (5) in Richtung zum Deckel (40) erstreckende Zentriervorrichtung (14) für die Feder (49) festgelegt ist.

25. Ladedruckregler nach Anspruch 24, **dadurch gekennzeichnet, dass** die Zentriervorrichtung (14) ein konischer Ring ist.

26. Ladedruckregler nach Anspruch 24 oder 25, **dadurch gekennzeichnet, dass** die Feder (49) auf der Außenseite der Zentriervorrichtung (14) angeordnet ist und dass sich die Rollmembran (16) der Innenseite der Zentriervorrichtung (14) anschmiegt.

27. Ladedruckregler nach einem der vorstehenden Ansprüche, **dadurch gekennzeichnet, dass** der Einsatz (43) koaxial zur Regelstange (18) angeordnet ist.

## Claims

1. A boost pressure controller for exhaust gas turbochargers of combustion engines for cars comprising
- a case (1), which is covered by a lid (40)
- a flexible membrane (35), whose outer rim (38) is clamped between the outer rim (39) of the case (1) and the lid (40),
- a control rod (18), which sealingly protrudes from the case (1) so that one of its ends (19) lies inside the case (1) and its other end outside the case (1),
- a supporting member (31) for the membrane (35), which is fixedly connected to the control rod (18) and abuts against the membrane (35),
- a spring (49) acting upon the supporting member (31),
- a connection (51) for an overpressure source on the side of the membrane (35) facing away from the spring (49) and/or with a connection (59) for an vacuum source on the side of the membrane (35) pointing to the spring (49),
- and a measuring device (52), which reacts to the position of the control rod (18) by means of a Hall sensor (54),
**characterised in that** the measuring device also exhibits at least one additional Hall sensor (54) reacting to the position of the control rod (18).

2. A boost pressure controller according to claim 1, **characterised in that** a magnet (29) is provided which can be shifted together with the control rod (18) and that the measuring device (52) reacts to the position of the magnet (29).

3. A boost pressure controller according to claim 2, **characterised in that** the magnet is arranged at the end (19) of the control rod (18) which is inside the case (1).

4. A boost pressure controller according to claim 2, **characterised in that** the magnet (29) is arranged on a carrier (23) which is installed on the control rod (18) and extends therefrom towards the lid (40).

5. A boost pressure controller according to claim 4, **characterised in that** the magnet (29) lies on the lid (40) in the end position of the control rod (18), in which position said rod is run into the case (1).

6. A boost pressure controller according to any of the claims 2 to 5, **characterised in that** the magnet (29) is annular and arranged coaxially to the control rod (18).

7. A boost pressure controller according to any of the claims 2 to 6, **characterised in that** the magnet (29) is magnetised in direction of the longitudinal axis (30) of the control rod (18).

8. A boost pressure controller according to any of the claims 4 to 7, **characterised in that** the carrier (23) of the magnet (29) is a fairly long and hollow structure, which has a longitudinal axis coinciding with the longitudinal axis (30) of the control rod (18).

9. A boost pressure controller according to claim 8, **characterised in that** the carrier (23) is a bushing.

10. A boost pressure controller according to any of the previous claims, **characterised in that** two identical Hall sensors (54) are arranged symmetrically relative to one another on opposite sides of the longitudinal axis (30) of the control rod (18) and connected in such a way that their output signals are added to each other.

11. A boost pressure controller according to any of the previous claims, **characterised in that** at least two Hall sensors (54) are arranged with a mutual spacing in direction of the longitudinal axis (30) of the control rod (18).

12. A boost pressure controller according to any of the previous claims, **characterised in that** at least two pairs (55, 56) of Hall sensors are arranged with a mutual spacing in direction of the longitudinal axis (30) of the control rod (18).

13. A boost pressure controller according to any of the previous claims, **characterised in that** the lid (40) has an opening (42), which can be closed by an insert (43), in which the measuring device (52) is installed.

14. A boost pressure controller according to claim 13, **characterised in that** the insert (43) has an extension (48) which extends over the inside of the lid (40) in direction of the control rod (18) to extend into the inside the boost pressure controller.

15. A boost pressure controller according to claim 14, **characterised in that** the Hall sensors (54) are installed in the extension (48) of the measuring device.

16. A boost pressure controller according to any of the previous claims, **characterised in that** the configuration of the flexible membranes (35), of the supporting member (31) supporting said membranes and of the connection (51) is selected for an overpressure source in such a way that the control rod (18) is extended out of the boost pressure controller when an overpressure source is connected thereto.

17. A boost pressure controller according to any of the previous claims, **characterised in that** the configuration of the flexible membranes (35), of the supporting member (31) supporting said membranes and of the connection (59) is selected for a vacuum source in such a way that the control rod (18) is extended out of the boost pressure controller when a vacuum source is connected thereto.

18. A boost pressure controller according to any of the previous claims, **characterised in that** another membrane (16) is provided on the side of the membrane (35) pointing to the control rod (18) at a distance from said membrane, whereas said additional membrane is fixed to the case (1) with its outer rim (17) and abuts with its inner rim (22) against the control rod (18) or an extension (23).

19. A boost pressure controller according to claim 18, **characterised in that** the additional membrane (16) exhibits a smaller cross-section than the membrane (35) clamped between the case (1) and the lid (40).

20. A boost pressure controller according to claim 18 or 19, **characterised in that** the membrane (35) unrolls in the vicinity of its outer rim (38), whereas conversely the additional membrane, also designated as roll membrane (16), unrolls in the region adjoining its inner rim (22).

21. A boost pressure controller according to claim 18, 19 or 20, **characterised in that** the outer diameter of the additional membrane (16) is smaller than the outer diameter of the membrane (35) clamped between the case (1) and the lid (40).

22. A boost pressure controller according to any of the claims 18 to 21, **characterised in that** the additional membrane (16) is fixed to the rim of a hole (5) which is situated in the bottom (3) of the case (1).

23. A boost pressure controller according to claim 22, **characterised in that** a bushing (7) for accommodating a guide bushing (11) for the control rod (18) is fixed to the rim of the hole (5) together with the outer rim (17) of the additional membrane (16).

24. A boost pressure controller according to claim 22 or 23, **characterised in that** additionally a centring device (14) intended for the spring (49) and extending from the hole (5) towards the lid (40) is fixed on the rim of the hole (5) in the bottom (3) of the case (1).

25. A boost pressure controller according to claim 24, **characterised in that** the centring device (14) is a conical ring.

26. A boost pressure controller according to claim 24 or 25, **characterised in that** the spring (49) is installed on the outside of the centring device (14) and that the roll membrane (16) snugly fits itself to the inside of the centring device (14).

27. A boost pressure controller according to any of the previous claims, **characterised in that** the insert (43) is installed coaxially to the control rod (18).

## Revendications

1. Régulateur de pression de charge pour turbochargeurs de gaz d'échappement de moteurs à combustion pour automobiles pourvu
- d'un boîtier (1), qui est recouvert d'un couvercle (40),
- d'une membrane flexible (35), qui est fixée par son bord extérieur (38) entre le bord extérieur (39) du boîtier (1) et le couvercle (40),
- d'une tige de commande (18), qui sort hermétiquement du boîtier (1), de telle sorte que l'une de ses extrémités (19) repose dans le boîtier (1) et son autre extrémité à l'extérieur du boîtier (1),
- d'une partie support (31) pour la membrane (35), qui est solidaire de la tige de commande (18) et jouxte la membrane (35),
- d'un ressort (49) agissant sur la partie support (31),
- d'une connexion (51) prévue pour une source de surpression sur un côté de la membrane (35) opposé au ressort (49) et/ou d'une connexion (59) prévue pour une source de dépression sur le côté de la membrane (35) tourné vers le ressort (49),
- et d'un dispositif de mesure (52), qui réagit à la position de la tige de commande (18) à l'aide d'un capteur Hall (54),
**caractérisé en ce que** le dispositif de mesure présente encore au moins un capteur Hall (54) supplémentaire réagissant à la position de la tige de commande (18).

2. Régulateur de pression de charge selon la revendication 1, **caractérisé en ce qu'**un aimant (29) est prévu, que l'on peut déplacer en même temps que la tige de commande (18), et **en ce que** le dispositif de mesure (52) réagit à la position de l'aimant (29).

3. Régulateur de pression de charge selon la revendication 2, **caractérisé en ce que** l'aimant est installé à l'extrémité (19) de la tige de commande (18) reposant dans le boîtier (1).

4. Régulateur de pression de charge selon la revendication 2, **caractérisé en ce que** l'aimant (29) est installé sur un support (23) qui est installé sur la tige de commande (18) et s'étend depuis celle-ci en direction du couvercle (40).

5. Régulateur de pression de charge selon la revendication 4, **caractérisé en ce que** l'aimant (29) occupe une position finale de la tige de commande (18) dans laquelle cette dernière est rentrée dans le boîtier (1).

6. Régulateur de pression de charge selon l'une quelconque des revendications 2 à 5, **caractérisé en ce que** l'aimant (29) est de forme annulaire et disposé coaxialement à la tige de commande (18).

7. Régulateur de pression de charge selon l'une quelconque des revendications 2 à 6, **caractérisé en ce que** l'aimant (29) est magnétisé en direction de l'axe longitudinal (30) de la tige de commande (18).

8. Régulateur de pression de charge selon l'une quelconque des revendications 4 à 7, **caractérisé en ce que** le support (23) de l'aimant (29) est une structure relativement longue et creuse qui possède un axe longitudinal coïncidant avec l'axe longitudinal (30) de la tige de commande (18).

9. Régulateur de pression de charge selon la revendication 8, **caractérisé en ce que** le support (23) est un manchon.

10. Régulateur de pression de charge selon l'une quelconque des revendications précédentes, **caractérisé en ce que** deux capteurs Hall identiques (54) sont disposés symétriquement l'un par rapport à l'autre sur des côtés opposés de l'axe longitudinal (30) de la tige de commande (18) et connectés de telle sorte que leurs signaux de sortie s'additionnent.

11. Régulateur de pression de charge selon l'une quelconque des revendications précédentes, **caractérisé en ce qu'**au moins deux capteurs Hall (54) sont disposés à la même distance de part et d'autre en direction de l'axe longitudinal (30) de la tige de commande (18).

12. Régulateur de pression de charge selon l'une quelconque des revendications précédentes, **caractérisée en ce qu'**au moins deux pairs (55, 56) de capteurs Hall sont disposés à la même distance de part et d'autre en direction de l'axe longitudinal (30) de la tige de commande (18).

13. Régulateur de pression de charge selon l'une quelconque des revendications précédentes, **caractérisée en ce que** le couvercle (40) possède une ouverture (42), que l'on peut refermer à l'aide d'un insert (43) dans lequel le dispositif de mesure (52) est disposé.

14. Régulateur de pression de charge selon la revendication 13, **caractérisé en ce que** l'insert (43) possède un prolongement (48) qui traverse la face interne du couvercle (40) en direction de la tige de commande (18) pour pénétrer dans le régulateur de pression de charge.

15. Régulateur de pression de charge selon la revendication 14, **caractérisé en ce que** les capteurs Hall (54) sont disposés dans le prolongement (48) du dispositif de mesure.

16. Régulateur de pression de charge selon l'une quelconque des revendications précédentes, **caractérisé en ce que** la configuration de la membrane flexible (35), de la partie support (31) supportant ladite membrane et de la connexion (51) est choisie pour une source de surpression de telle sorte, que la tige de commande (18) sort du régulateur de pression de charge lors du raccordement à une source de surpression.

17. Régulateur de pression de charge selon l'une quelconque des revendications précédentes, **caractérisé en ce que** la configuration de la membrane flexible (35), de la partie support (31) supportant ladite membrane et de la connexion (59) est choisie pour une source de dépression de telle sorte que la tige de commande (18) sort du régulateur de pression de charge lors du raccordement à une source de dépression.

18. Régulateur de pression de charge selon l'une quelconque des revendications précédentes, **caractérisé en ce qu'**une membrane supplémentaire (16) est prévue sur le côté de la membrane (35) tourné vers la tige de commande (18) à une certaine distance de celle-ci, laquelle membrane est fixée sur le boîtier (1) par son bord extérieur (17) et jouxte la tige de commande (18) ou un prolongement (23) de la tige de commande (18) par son bord intérieur.

19. Régulateur de pression de charge selon la revendication 18, **caractérisé en ce que** la membrane supplémentaire (16) possède une section transversale inférieure à la section de la membrane (35) fixée entre le boîtier (1) et le couvercle (40).

20. Régulateur de pression de charge selon la revendication 18 ou 19, **caractérisé en ce que** la membrane (35) part en dérive au voisinage de son bord extérieur (38) alors qu'en revanche la membrane supplémentaire, désignée également comme membrane roulante (16), part en dérive dans la zone voisine de son bord interne (22).

21. Régulateur de pression de charge selon la revendication 18, 19 ou 20, **caractérisé en ce que** le diamètre externe de la membrane supplémentaire (16) est inférieur au diamètre externe de la membrane (35) fixée entre le boîtier (1) et le couvercle (40).

22. Régulateur de pression de charge selon l'une quelconque des revendications 18 à 21, **caractérisé en ce que** la membrane supplémentaire (16) est fixée au bord d'un trou (5), qui se trouve au fond (3) du boîtier (1).

23. Régulateur de pression de charge selon la revendication 22, **caractérisé en ce qu'**un manchon (7) est définie au bord du trou (5) en même temps que sur le bord extérieur (17) de la membrane supplémentaire (16) pour recevoir une douille de guidage (11) pour la tige de commande (18).

24. Régulateur de pression de charge selon la revendication 22 ou 23, **caractérisé en ce qu'**un dispositif de centrage (14), s'étendant à partir du trou (5) en direction du couvercle (40), est défini au bord du trou (5) au fond (3) du boîtier (1) pour le ressort (49).

25. Régulateur de pression de charge selon la revendication 24, **caractérisé en ce que** le dispositif de centrage (14) est une bague conique.

26. Régulateur de pression de charge selon la revendication 24 ou 25, **caractérisé en ce que** le ressort (49) est disposé sur la face externe du dispositif de centrage (14) et que la membrane roulante (16) épouse le contour de la face interne du dispositif de centrage (14)..

27. Régulateur de pression de charge selon l'une quelconque des revendications précédentes, **caractérisé en ce que** l'insert (43) est disposé coaxialement à la tige de commande (18).
